# EUROPÄISCHE PATENTSCHRIFT

(11) **EP 0 634 591 B1**
(45) Veröffentlichungstag und Bekanntmachung des Hinweises auf die Patenterteilung: **12.08.1998**
(21) Anmeldenummer: 94108365.1
(22) Anmeldetag: 31.05.1994
(51) Int. Cl.: F16H 61/02, F16H 61/00

(54) **Verfahren und Vorrichtung zum Steuern eines automatischen Getriebes**
Control method and device for an automatic transmission
Méthode et dispositif de commande d'une boîte de vitesses automatique

(30) Priorität: 17.07.1993 DE 4324091
(43) Veröffentlichungstag der Anmeldung: 18.01.1995
(73) Patentinhaber: Dr.Ing.h.c. F. Porsche Aktiengesellschaft, 70435 Stuttgart (DE)
(72) Erfinder: Heid, Gerhard, D-71229 Leonberg (DE); Seidel, Willi, D-71735 Eberdingen-Hochdorf (DE)

(56) Entgegenhaltungen:
- EP-A- 0 471 102
- EP-A- 0 532 365
- DE-A- 3 334 716
- DE-A- 3 922 051
- DE-Z AUTOMOBILTECHNISCHE ZEITSCHRIFT, September 1992, Seiten 428-436, XP002001206 WELTER, ANDREAS ET AL.: "Die adaptive Getriebesteuerung für die Automatikgetriebe der BMW Fahrzeuge mit Zwölfzilindermotor"

## Beschreibung

Die Erfindung betrifft ein Verfahren und eine Vorrichtung zum Steuern eines automatischen Getriebes nach dem Oberbegriff des Patentanspruches 1.

Automatisch schaltende gestufte Getriebe ermitteln mit Hilfe von Schaltkennfeldern in der Regel aus der Stellung der Drosselklappe und der Motordrehzahl den einzulegenden Getriebegang. Die in den Schaltkennfeldern enthaltenen Schaltkennlinien, an denen ein Gang gewechselt wird, werden in bekannten Weiterentwicklungen von derartigen Getrieben abhängig von verschiedenen Parametern verschoben. So ist es beispielsweise aus der DE 39 22 051 Al bekannt, zwischen verschiedenen Schaltkennfeldern abhängig vom Fahrverhalten eines Fahrers oder dessen verkehrssituationsbedingtem Handeln zu wechseln und damit die Schaltkennlinien zu verschieben.

Es ist ferner aus der DE-Z "Automobiltechnische Zeitschrift", Heft 9/1992, S. 428-436 bekannt, mit Hilfe einer sogenannten Fahrwiderstandsüberwachung auch erhöhte Fahrwiderstände zu erkennen und abhängig hiervon ein Berg-/Anhänger-Schaltprogramm aufzurufen. Hierzu wird aus dem aktuellen Motorbetriebszustand die Beschleunigung bei einer Fahrt mit normaler Beladung in der Ebene abgeschätzt. Liegt die tatsächliche Beschleunigung unterhalb des dermaßen ermittelten Wertes, so wird das genannte spezielle Schaltprogramm aufgerufen, in dem das Fahrzeug bei hohen Motordrehzahlen betrieben wird.

Aus der DE-A- 33 34 716 geht ein Verfahren zur Steuerung eines automatischen Getriebes hervor, bei dem ein eine Fahrbahnsteigung kennzeichnender Wert ermittelt und abhängig von diesem Wert der Schaltpunkt um eine Drehzahldifferenz verschoben werden. Alternativ kan anstellle der Straßensteigung das jeweilige stationäre Moment zu verwenden zur Bestimmung der Verschiebung der Schaltpunkte herangezogen werden; dieses stationäre Antriebsmoment beinhaltet keine Momentenanteile, die zur Beschleunigung des Fahrzeuges erforderlich sind.

Ausgehend von diesem Stand der Technik ist es Aufgabe der Erfindung, ein Verfahren und eine Vorrichtung zum Steuern eines automatisch schaltenden Getriebes zu schaffen, das alle Arten von Fahrwiderstandsänderungen erkennt und hierauf abhängig vom erkannten Fahrwiderstand reagiert.

Diese Aufgabe wird erfindungsgemäß mit den Merkmalen des kennzeichnenden Teiles der unabhängigen Ansprüche gelöst. Nach dem erfindunggemäßen Verfahren werden die Stellung eines Leistungssteuerorganes des Fahrzeuges und die Reaktion des Fahrzeuges hierauf ermittelt und zueinander ins Verhältnis gesetzt. Dieses Verhältnis wird anschließend mit einem Verhältmis verglichen, wie es bei normaler Fahrt in der Ebene auftritt. Abhängig von der Abweichung zwischen aktuellem Verhältnis und Normal-Verhältnis werden nun die Übersetzungen zu höheren Motordrehzahlen hin verschoben; dies bedeutet, daß die einer Drosselklappenstellung und einer Motordrehzahl zugeordnete Übersetzung nun bei einer niedrigeren Motordrehzahl erreicht wird bzw. das Motordrehzahlniveau erhöht wird. Mit der Erfindung ist in vorteilhafter Weise erreicht, daß sowohl Verminderungen des Fahrwiderstandes, wie z.B. bei Bergabfahrt, als auch Erhöhungen des Fahrwiderstandes, wie z.B. bei Bergauffahrt oder Anhängerbetrieb, von einem einzigen Verfahren erkannt werden. Im Gegensatz zum Stand der Technik wird bei veränderten Fahrwiderständen kein festes, spezielles Schaltprogramm aufgerufen, sondern es wird eines den herrschenden Verhältnissen angepaßte Motorleistung eingestellt. Schließlich ist das erfindungsgemäße Verfahren für alle Arten von Getrieben einsetzbar, d.h. insbesondere sowohl für gestufte automatische Getriebe als auch für stufenlose automatische Getriebe.

In Weiterbildung der Erfindung wird durch die Fahrzeugbeschleunigung die vom Fahrer auf seine durch die Stellung des Leistungssteuerorganes vorgegebene Leistungsanforderung erwartete Reaktion des Fahrzeuges erfaßt. Damit kann die Erfindung weitgehend auf bekannte und in der Regel bereits vorhandene Einrichtungen und Sensoren des Fahrzeuges zurückgreifen und ist somit kostengünstig und einfach zu realisieren.

Es wird ferner vorgeschlagen, die Verschiebung der Übersetzungen in Betrag und Geschwindigkeit nach der festgestellten Abweichung zu bemessen und die Verschiebung nach einem PT1-Verhalten durchzuführen. Dadurch ist das Leistungsvermögen des Motors dem Unterschied zwischen der Leistungsanforderung, repräsentiert durch die Stellung des Leistungssteuerorganes, und der Leistungsabgabe, d.h. der Reaktion des Fahrzeuges, besonders gut angepaßt. Bei kleinen Abweichungen werden die Übersetzungen nur wenig verschoben. Wenn die Abweichung weiterhin besteht, werden die Übersetzungen langsam weiter verschoben. Bei großen Abweichungen hingegen werden die Übersetzungen unmittelbar und schnell um große Beträge verschoben.

Die erfindungsgemäße Vorrichtung weist ebenfalls alle dem erfindungsgemäßen Verfahren eigenen Vorteile auf. Darüber hinaus zeichnet sie sich durch den ebenso einfachen wie wirksamen Einsatz eines Kennfeldes zur Darstellung des Vergleiches der Stellung des Leistungssteuerorganes und der Reaktion des Fahrzeuges hierauf, sowie zur Ermittlung der Abweichung dieses Verhältnisses vom Normal-Verhältnis aus. Dies ist in wiederum besonders einfacher Weise dort möglich, wo ohnehin Kennfelder zur Veränderung der Schaltkennlinien herangezogen werden; hier muß kein Kennfeld ergänzt, sondern in der Regel nur ein bereits vorhandenes Kennfeld modifiziert werden.

Die Verschiebung der Übersetzung, die sich, wie bereits beschrieben, als Erhöhung des Motordrehzahlniveaus auswirkt, kann im einfachsten Fall als Manipulation der zur Bestimmung der einzustellenden Übersetzung herangezogenen Motordrehzahl ausgeführt sein. In diesem Fall wird das Motordrehzahlsignal um einen von der Abweichung abhängigen Anteil erhöht und damit eine ursprünglich für eine höhere Motordrehzahl als wirklich herrschend vorgesehene Übersetzung eingestellt. Für ein Stufengetriebe wird vorgeschlagen, mehrere Schaltkennfelder vorzusehen und die Verschiebung der Übersetzung durchzuführen, indem nach Maßgabe der Abweichung das Schaltkennfeld gewechselt wird. Für ein stufenloses Getriebe, das mehrere Steuerkennlinien aufweist, wird in analoger Weise vorgeschlagen, die Verschiebung der Übersetzung durch Wechsel der Steuerkennlinie nach Maßgabe der Übersetzung vorzunehmen. Bei stufenlosen Getrieben kann selbstverständlich auch zwischen zwei Steuerkennlinien, nämlich einer verbrauchsoptimalenSteuerkennlinie und einer leistungsoptimalen Steuerkennlinie, mit Hilfe der Abweichung interpoliert werden.

Die Erfindung ist nachstehend anhand des in den Zeichnungen dargestellten Ausführungsbeispieles beschrieben.

Es zeigen
- Fig. 1: eine schematische Darstellung einer Steuerung zur Auswahl eines Schaltkennfeldes für ein automatisch schaltendes Getriebe,
- Fig. 2: ein Kennfeld zur Berücksichtigung von Fahrwiderständen und
- Fig. 3: eine Darstellung von Zugehörigkeitsfunktionen für eine Berücksichtigung von Fahrwiderständen.

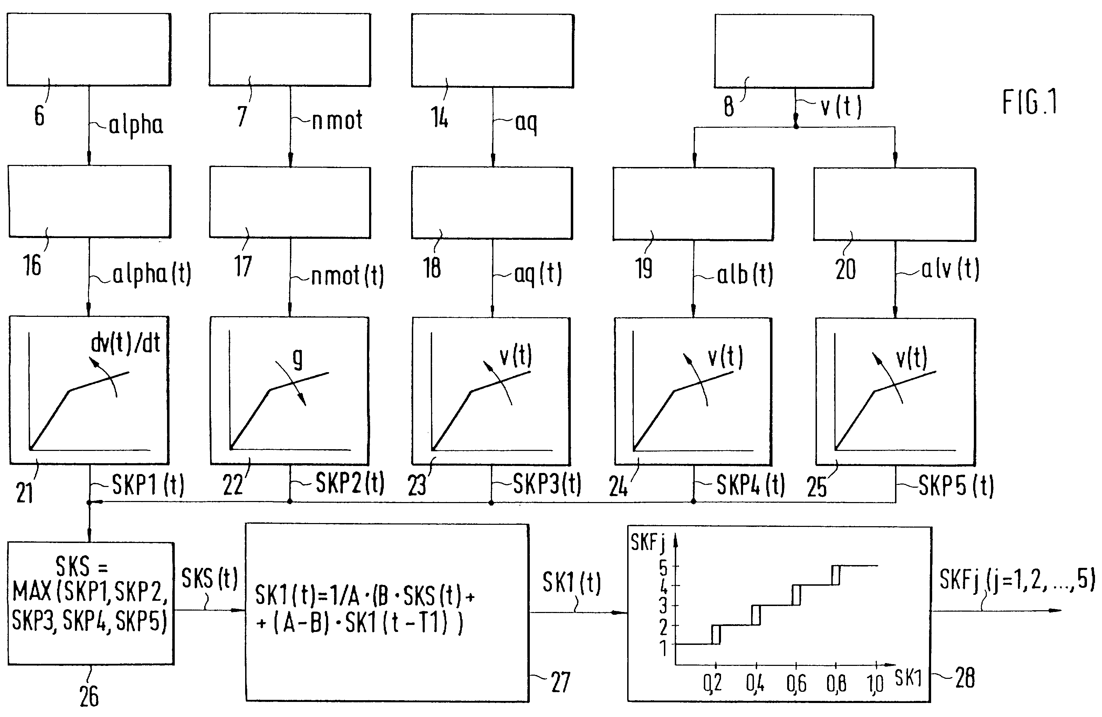

Das Ausführungsbeispiel nach **Fig. 1** geht von einer elektrohydraulischen Steuerung eines selbsttätig schaltenden Kraftfahrzeuggetriebes aus, wie sie aus der DE 39 22 051 A1 bekannt ist. Diese Steuerung erfaßt mittels geeigneter Geber 6, 7, 8, 14 die Größen Drosselklappenwinkel alpha(t), Motordrehzahl nmot(t), Fahrgeschwindigkeit v(t) und Querbeschleunigung aq(t). Nach der Erfassung werden diese Werte in Filtern 16 bis 20 gefiltert und anschließend fünf Kennfeldern 21 bis 25 zugeführt. Diese Kennfelder sind in der Regel noch von einer weiteren Eingangsgröße abhängig; so geht in das erste Kennfeld neben dem Drosselklappenwinkel alpha(t) auch die Fahrzeuggeschwindigkeitsänderung dv(t)/dt, in das zweite Kennfeld 22 neben der Motordrehzahl nmott auch eine eingelegte Gangstufe g und in die folgenden Kennfelder 23 bis 25 neben den Eingangsgrößen Querbeschleunigung aq(t), Längsbeschleunigung alb(t) und Längsverzögerung alv(t) auch die Fahrgeschwindigkeit v(t) ein. Die fünf Kennfelder 21 bis 25 liefern fünf primäre Kenngrößen SKP1(t) bis SKP5(t), aus denen dann in einer Verknüpfungsfunktion 26, die hier als Maximalwertauswahl ausgeführt ist, eine sekundäre Kenngröße SKS(t) gewonnen und abgespeichert wird. Aus dieser sekundären Kenngröße SKS(t) wird dann in einem Filter 27 mit PT1-Verhalten eine erste Fahraktivität SK1(t) erzeugt, indem der aktuelle Wert der sekundären Kenngröße SKS(t) und der Wert der einen Berechnungszeitraum T1 zuvor ermittelten und abgespeicherten ersten Fahraktivität SK1 (t-T1) zu einer gewichteten Summe zusammengesetzt wird. Die erste Fahraktivität SK1(t) wird nun in einem sechsten Kennfeld 28 zur Auswahl eines Schaltprogrammes SKFj herangezogen. Im Ausführungsbeispiel sind fünf Schaltprogramme SKF1 bis SKF5 vorgesehen, die jeweils, unter Berücksichtigung einer gewissen Schalthysterese, Wertbereichen der ersten Fahraktivität SK1(t) zugeordnet sind. Dabei werden kleinen Werten der Fahraktivität SK1(t) verbrauchsoptimierte Schaltprogramme SKFj und höheren Werten der Fahraktivität SK1(t) leistungsoptimierte Schaltprogramme SKFj zugeordnet.

Diese Steuerung arbeitet grundsätzlich wie folgt: Ausgehend vom Wert Null für die erste Fahraktivität SK1(t) und dem entsprechenden verbrauchsoptimalen Schaltprogramm SKF1 wird geprüft, ob eines der eher leistungsoptimierten Schaltprogramme SKF2 bis SKF5 zu wählen ist. Hierzu werden die Eingangsgrößen in den fünf Kennfeldern 21 bis 25 so aufbereitet, daß die Werte der primären Kenngrößen SKP1(t) bis SKP5(t) steigen, wenn die Eingangsgrößen ein eher leistungsoptimiertes Schaltkennfeld angezeigt sein lassen. Durch die Verknüpfungsfunktion 26 wird dann die primäre Kenngröße SKPj(t) ausgewählt, die den höchsten Wert angenommen hat und nachfolgend als sekundäre Kenngröße SKS(t) zur Bildung der ersten Fahraktivität SK1(t) herangezogen. Durch das PT1-Verhalten des Filters 27 ist der Einfluß der sekundären Kenngröße SKS(t) zeitverzögert.

Für detailliertere Angaben zu Aufbau und Funktionsweise der Steuerung sei an dieser Stelle auf die DE 39 22 051 A1 verwiesen.

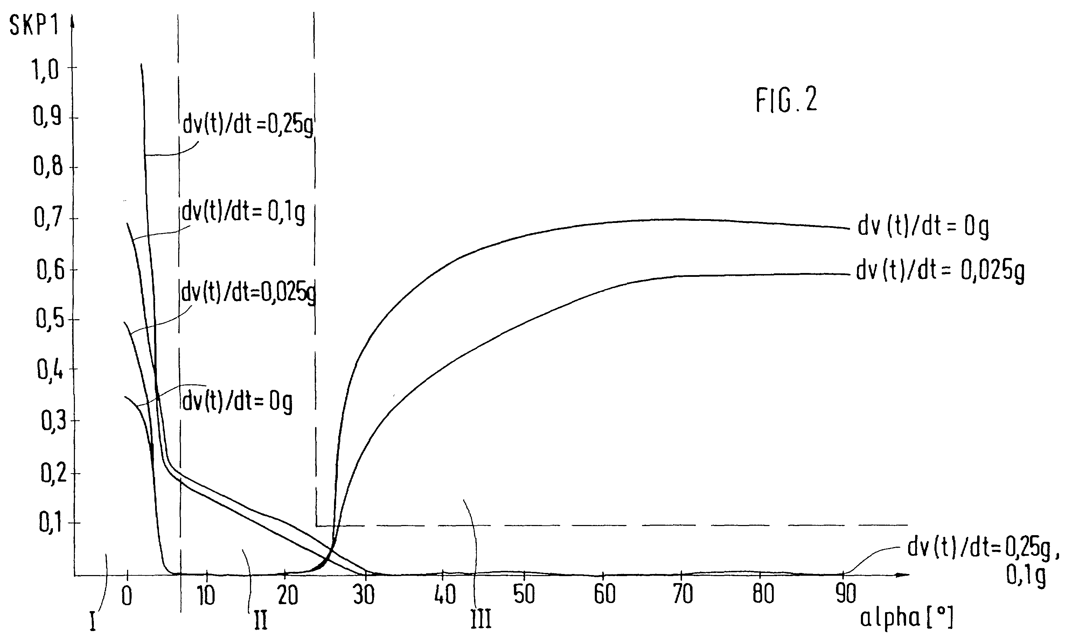

Abweichend von der dort dargestellten Steuerung ist nun das erste Kennfeld SKP1(t), wie in **Fig. 2** dargestellt, ausgeführt. Das Kennfeld zeigt die Abhängigkeit der ersten primären Kenngröße SKP1(t) vom Drosselklappenwinkel alpha(t)und der Änderung der Fahrgeschwindigkeit dv(t) /dt. Das Kennfeld ist in drei Bereiche aufgeteilt; im Bereich I wird auf verminderten Fahrwiderstand, wie er z.B. bei Bergabfahrt auftritt, erkannt, im Bereich II auf Normalbetrieb und im Bereich III auf erhöhten Fahrwiderstand, wie er beispielsweise bei Bergauffahrt auftritt. Grundsätzlich wird mittels des dargestellten ersten Kennfeldes ermittelt, ob dem eingestellten Drosselklappenwinkel alpha(t), d.h. der Leistungsanforderung durch den Fahrer, eine entsprechende Reaktion des Fahrzeuges in Form einer Änderung der Fahrgeschwindigkeit gegenübersteht.

Der Bereich II ist der Normal-Bereich, d.h. hier entspricht das Verhältnis von Drosselklappenwinkel alpha(t) zur Fahrzeuggeschwindigkeitsänderung dv(t)/dt einem Normal-Verhältnis. In diesem Bereich sind die Werte der pimären Kenngröße SKP1(t) klein, so daß die erste primäre Kenngröße SKP1(t) ob der Maximalwertauswahl in der Verknüpfungsfunktion 26 keinen großen Einfluß auf die sekundäre Kenngröße SKS(t) haben wird bzw. das verbrauchsoptimalen Schaltprogramm SKF1 wählt. Dieser Bereich ist darüber hinaus so ausgelegt, daß auch Stadtverkehr bzw. betont ruhiges Fahren erfaßt werden, denn auch hier ist ein Wechsel zu den eher leistungsoptimierten Schaltprogrammen SKF2 bis SKF5 nicht erforderlich. So erstreckt sich der Bereich II über alle Werte des Drosselklappenwinkels alpha(t) und ordnet hier solche Werte der ersten primären Kenngröße SKP1(t) zu, die dem verbrauchsoptimalen Schaltprogramm SKF1 zugeordnet sind. Der Bereich sehr kleiner Drosselklappenwinkel unter 7° ist im vorliegenden Fall als Schubbereich ausgenommen. Die Erstreckung des Bereiches II über alle Werte der ersten primären Kenngröße SKP1(t) im Bereich des Drosselklappenwinkels alpha(t) von 7° bis 24° soll anzeigen, daß in diesem Bereich der Wert für die erste primäre Kenngröße SKP1(t) so gewählt ist, daß das verbrauchsoptimale Schaltprogramm SKF1 erreicht wird. Insgesamt sind im Bereich II ist die Werte der ersten primären Kenngröße SKP1(t) vergleichsweise klein, so daß die erste primäre Kenngröße SKP1(t) keinen großen Einfluß auf die sekundäre Kenngröße SKS(t) hat oder das verbrauchsoptimale Schaltprogramm SKF1 erreicht wird.

Der Bereich I für verminderten Fahrwiderstand umfaßt vor allem kleine Drosselklappenwinkel alpha(t) unterhalb von etwa 7° und steht damit in der Regel für den Schubbetrieb. Auch bei neutral rollendem Fahrzeug mit einer Veränderung der Fahrgeschwindigkeit dv(t)/dt=0 steigt hier mit sinkendem Drosselklappenwinkel alpha(t) der Wert der primären Kenngröße SKP1(t), um das zweite Schaltkennfeld SKF2 anzuwählen und damit nach der Schubphase wieder ausreichend beschleunigen zu können oder die Bremswirkung des Motors im Schub kann erhöht werden. Erreicht im Bereich I die Veränderung der Fahrgeschwindigkeit dv(t)/dt größere Werte, wie z.B. 2,5 m/s², so beschleunigt das Fahrzeug trotz nahezu geschlossener Drosselklappe vergleichsweise stark, so daß von einem Gefälle oder ähnlichem auszugehen ist. Hier erreicht die primäre Kenngröße SKP1(t) hohe Werte bis zu 1, um so rasch das sportlichste Schaltkennfeld SKF5 anzuwählen und damit eine Rückschaltung um einen oder mehrere Gänge rasch herbeizuführen.

Der Bereich III, der bei erhöhtem Fahrwiderstand erreicht wird, umfaßt die höheren Werte des Drosselklappenwinkels alpha(t), hier oberhalb von 24°. In diesem Bereich liegen kleinere Werte der Fahrgeschwindigkeitsänderung dv(t)/dt im Bereich kleinerca. 0,05 m/s². Mit steigendem Wert der Fahrgeschwindigkeitsänderung dv(t)/dt sinkt hier der Wert der ersten primären Kenngröße SKP1(t), da hiermit die Fahrzeugreaktion immer mehr der Leistungsanforderung in Form des Drosselklappenwinkels alpha(t) entspricht, bis schließlich bei Fahrgeschwindigkeitsänderung dv(t)/dt oberhalb ca. 0,05 m/s² der Bereich III verlassen wird. Die erste primäre Kenngröße SKP1(t) erreicht ihren höchsten Wert bei einer Fahrgeschwindigkeitsänderung dv(t)/dt von 0 m/s². Dieser Wert ist so gewählt, daß das vierte Schaltprogramm SKF4 gerade erreicht wird. Allgemein gilt, daß bei gleichbleibend kleiner Veränderung der Fahrzeuggeschwindigkeit dv(t)/dt mit steigendem Drosselklappenwinkel alpha(t) auch der Wert der primären Kenngröße SKP1(t) steigt.

Für das gesamte Kennfeld gilt, daß der Bereich zwischen den beschriebenen Werten bspw. durch Interpolation kontinuierlich abgedeckt wird. Das Kennfeld ist gang- bzw. übersetzungsabhängig ausgeführt, d.h. für jeden Getriebegang bzw. für jede Übersetzung ist ein eigenes Kennfeld vorgesehen. Hiermit wird dem übersetzungsabhängigen Beschleunigungsvermögen des Fahrzeuges Rechnung getragen. Darüber hinaus wird die erste primäre Kenngröße SKP1(t) noch durch Multiplikation mit einem fahrgeschwindigkeitsabhängigen Faktor modifiziert, um auch den Einfluß der Fahrgeschwindigkeit v(t) auf das Beschleunigungsvermögen zu erfassen. Anderenfalls würde beispielsweise bei schneller Autobahnfahrt mit einem Drosselklappenwinkel alpha(t) von 70° und konstanter Geschwindigkeit immer das vierte, leistungsoptimale Schaltprogramm SKF4 erreicht, und damit der Treibstoffverbrauch des Fahrzeuges unnötig in die Höhe getrieben. Der fahrgeschwindigkeitsabhängige Faktor modifiziert daher den Wert der ersten primären Kenngröße SKP1(t) in der Art, daß der Wert der ersten primären Kenngröße SKP1(t) mit steigender Fahrgeschwindigkeit sinkt.

Durch das PT1-Verhalten des Filters 27 ist die Größe der primären Kenngröße SKP1(t) für die Zeit bis zu einer Rückschaltung bzw. bis zu einem Wechsel des Schaltkennfeldes SKFj von erheblicher Bedeutung. Im vorliegenden Fall ist eine Zeitkonstante von 25 Sekunden gewählt, d.h. der Ausgang des Filters 27 erreicht nach Anlegen eines Signales am Eingang nach 25 Sekunden 63% des Eingangssignalwertes. Da beispielsweise dem fünften Schaltkennfeld SKF5 im Kennfeld 28 ein Wertbereich zwischen etwa 0,8 und 1,0 der ersten Fahraktivität SK1(t) zugeordnet ist, kann dieses fünfte Schaltkennfeld SKF5 mit Werten der sekundären Kenngröße SKS(t) zwischen 0,8 und 1 erreicht werden. Das fünfte Schaltkennfeld SKF5 wird angewählt werden, sobald die erste Fahraktivität SK1(t) den Wert 0,8 überschreitet. Dies ist bei einem Wert der sekundären Kenngröße SKS(t) wenig größer als 0,8 erst nach mehreren Minuten der Fall, während es bei einem Wert der sekundären Kenngröße SKS(t) von 1 schon nach wenigen Sekunden der Fall ist. Im vorliegenden Beispiel dauert ein Wechsel über zwei Kennfelder mit dem minimalen Wert der sekundären Kenngröße SKS(t), mit dem dieser Wechsel möglich ist, 160 Sekunden, während mit dem maximalen Wert der sekundären Kenngröße SKS(t) nur 20 Sekunden benötigt werden.

Das Zeitverhalten des Filters 27 wirkt sich auf das Fahrverhalten in der Weise aus, daß sich kleine Abweichungen zwischen der durch den Drosselklappenwinkel alpha(t) ausgedrückten Leistungsanforderung und der Veränderung der Fahrgeschwindigkeit dv(t)/dt langsam und in geringem Umfang auswirken, während große Abweichungen zu schnellen Sprüngen durch die Schaltkennfelder SKFj führen.

Das beschriebene Verfahren kann für alle Steuerungen von automatisch schaltenden Getrieben einschließlich stufenloser Getriebe angewendet werden. Bei einem Einsatz für ein Getriebe mit nur einem Schaltkennfeld SKF kann die Verschiebung der Übersetzung als Manipulation der zur Bestimmung der einzustellenden Übersetzung herangezogenen Motordrehzahl nmot(t) ausgeführt sein. In diesem Fall wird das Motordrehzahlsignal nmot(t) um einen von der primären Kenngröße SKP1(t) abhängigen Anteil erhöht und damit eine ursprünglich für eine höhere Motordrehzahl nmot(t) als wirklich herrschend vorgesehene Übersetzung eingestellt.

Wenn zwei Schaltkennfelder SKFj vorgesehen sind kann mit diesem Verfahren eine Strategie zur Umschaltung auf das eher leistungsoptimierte Schaltkennfeld SKFj gewonnen werden, indem der Wert der primären Kenngröße SKP1(t) mit einem Grenzwert verglichen wird und ein Überschreiten dieses Grenzwertes zum Wechsel in das leistungsoptimierte Schaltprogramm SKFj führt. Hierbei bleiben wesentliche Eigenschaften des Verfahrens, wie Erkennen sowohl von Berauf- als auch von Bergabfahrt und zeitverzögertes Umschalten je nach der Größe der Abweichung zwischen Leistungsanforderung und Reaktion des Fahrzeuges erhalten. Beim Einsatz in Fahrzeugen mit mehreren Schaltkennfeldern kann die primäre Kenngröße SKP1(t) in der beschriebenen Weise zur Auswahl des Schaltkennfeldes herangezogen werden.

Eine für die Erfindung geeignete, nicht näher dargestellte Vorrichtung erhält eingangsseitig zumindest Signale eines Gebers für die Erfassung des Drosselklappenwinkels alpha(t) und eines Gebers für die Erfassung der Motordrehzahl nmot(t). Die Vorrichtung enthält zumindest eine Kennlinie zur Bestimmung einer Übersetzung aus diesen Signalen und steuert das Getriebe so an, daß diese Übersetzung eingestellt wird. Ein Geber für die Erfassung der Fahrgeschwindigkeit v(t) liefert ein Signal an ein Differenzierglied, so daß ein Signal für die Änderung der Fahrgeschwindigkeit dv(t)/dt gewonnen ist. Dieses Signal dv(t)/dt wird in einer ersten Vergleichseinrichtung mit dem Drosselklappenwinkelsignal alpha(t) ins Verhältnis gesetzt und anschließend in einer zweiten Vergleichseinrichtung mit einem von eingestellter Übersetzung und dem Fahrgeschwindigkeitssignal v(t) abhängigen Wert verglichen. Die bei diesem Vergleich gewonnene Abweichung wird in einem PT1-Glied gefiltert und anschließend vom Steuergerät erfaßt, das abhängig hiervon die Kennlinie zu höheren Motordrehzahlen nmot(t) hin verschiebt.

Alternativ können, wie im dargestellten Beispiel, beide Vergleichseinrichtungen durch das Kennfeld 27 dargestellt werden, das aus der Änderung der Fahrgeschwindigkeit v(t) und dem Drosselklappenwinkel Alpha (t) eine Zwischengröße ermittelt und das Kennfeld 27 seinerseits abhängig von der eingestellten Übersetzung, beispielsweise durch ein eigenes Kennfeld für jeden Getriebegang eines Stufengetriebes, gewählt ist. Die Zwischengröße wird dann mit Hilfe der Fahrgeschwindigkeit v (t) so modifiziert, daß sie mit steigender Fahrgeschwindigkeit abnimmt. Durch die Form der Zuordnung (die Kennlinie im Kennfeld 27) wird die Leistungsanforderung, nämlich der Drossenklappenwinkel Alpha( t), mit der Reaktion des Fahrzeuges, nämlich der Veränderung der Fahrgeschwindigkeit dv(t)/dt, verglichen und gleichzeitig der Vergleich mit dem Normal-Verhältnis durchgeführt. Die Abhängigkeit dieses Normal-Verhältnisses von dem von im Getriebe eingestellter Übersetzung und Fahrgeschwindigkeit abhängigen Beschleunigungsvermögen erfolgt hier über die von der Übersetzung abhängigen Kennfelder und die nachfolgende Modifikation der Zwischengröße mit Hilfe der Fahrgeschwindigkeit. Selbstverständlich ist dies auch mittels eines mehrdimensionalen Kennfeldes darstellbar, das die Zwischengröße aus allen vier Eingangsgrößen Änderung der Fahrgeschwindigkeit dv(t)/dt, Drosselklappenwinkel alpha(t), Fahrgeschwindigkeit v(t) und eingestellter Übersetzung bestimmt.

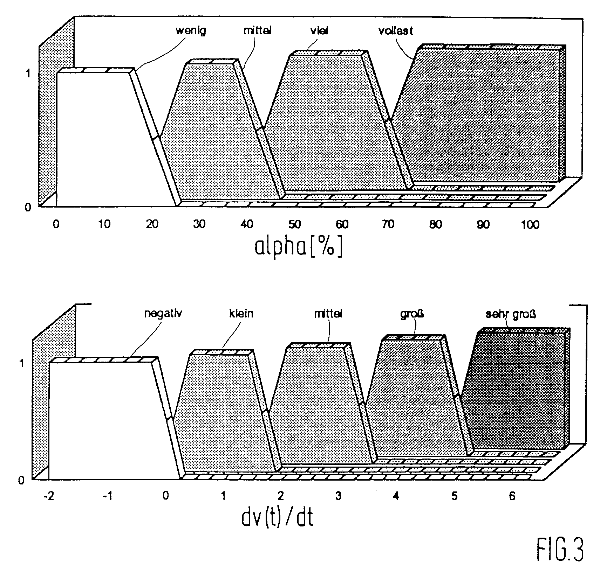

Selbstverständlich ist es auch möglich, die gezeigte Berücksichtigung von Fahrwiderständen mit Hilfe der Fuzzy-Logik durchzuführen. Hierzu zeigt **Fig. 3** eine Darstellung von Zugehörigkeitsfunktionen für die Eingangsgrößen Drosselklappenwinkel Alpa(t) und Änderung der Fahrgeschwindigkeit dv(t)/dt. Die Zugehörigkeitsfunktion für den Drosselklappenwinkel Alpa(t) weist vier Bereiche auf: wenig, mittel, viel und Vollast. Die Zugehörigkeitsfunktion für die Änderung der Fahrgeschwindigkeit dv(t)/dt ordnet diese den Bereichen negativ, klein, mittel, groß und sehr groß zu. Die anschließende Auswertung der Zugehörigkeiten erfolgt nach folgenden Regeln:
wenn alpha(t)= "wenig" und dv(t)/dt="groß" dann Bereich I(verminderter Fahrwiderstand)
wenn alpha(t)= "mittel" und dv(t)/dt="mittel" dann Bereich II (Normalbetrieb)
wenn alpha(t)= "Vollast" und dv(t)/dt="klein" dann Bereich IIIa (erhöhter Fahrwiderstand)
wenn alpha(t)= "Vollast" und dv(t)/dt="negativ" dann Bereich IIIb (stark erhöhter Fahrwiderstand)

Damit werden Drosselklappenwinkel Alpa(t) und Änderung der Fahrgeschwindigkeit dv(t)/dt in der Weise ausgewertet, daß zu einer konstanten Drosselklappenöffnung eine bestimmte Längsbeschleunigung erwartet wird. Ist die Drosselklappe nur wenig geöffnet und beschleunigt das Fahrzeug, so wird verminderter Fahrwiderstand erkannt. Umgekehrt bedeutet eine geringe Längsbeschleunigung trotz großer Drosselklappenöffnung erhöhter Fahrwiderstand.

## Patentansprüche

1. Verfahren zum Steuern eines automatischen Getriebes eines mit einer Brennkraftmaschine angetriebenen Kraftfahrzeuges, wobei die Brennkraftmaschine mittels eines Leistungssteuerorgans, vorzugsweise eines Fahrpedals oder einer Drosselklappe, beeinflußbar ist und Übersetzungen des Getriebes wenigstens abhängig von der Stellung des Leistungssteuerorganes (alpha(t)) und von der Motordrehzahl (nmot(t)) automatisch gewählt werden, **dadurch gekennzeichnet,** daß
- eine Reaktion des Fahrzeuges auf die Stellung des Leistungssteuerorganes (alpha(t)) ermittelt wird,
- die Stellung des Leistungssteuerorganes (alpha(t)) und eine Reaktion des Fahrzeuges hierauf zueinander ins Verhältnis gesetzt werden,wobei die Reaktion des Fahrzeuges durch die Änderung einer Fahrzeuggeschwindigkeit (dv(t)/dt) erfaßt wird,
- eine Abweichung dieses Verhältnisses zu einem bei normaier Fahrt in der Ebene herrschenden Verhältnis ermittelt wird und
- die Übersetzungen abhängig von der Abweichung zu höheren Motordrehzahlen hin verschoben werden.

2. Verfahren nach Anspruch 1, **dadurch gekennzeichnet,** daß die Verschiebung der Übersetzung in Größe und Geschwindigkeit mit der Abweichung steigt und nach einem PT1-Verhalten durchgeführt wird.

3. Vorrichtung zur Steuerung eines automatischen Getriebes eines mit einer Brennkraftmaschine angetriebenen Kraftfahrzeuges, mit
- einem Geber für die Stellung eines Leistungssteuerorganes (6), vorzugsweise eines Fahrpedals oder einer Drosselklappe, der Brennkraftmaschine,
- einem Geber für die Motordrehzahl (nmot(t)) der Brennkraftmaschine (7) und
- zumindest einem Schaltkennfeld (SKFj) oder zumindest einer Steuerkennlinie zur selbsttätigen Bestimmung einer Übersetzungen eines der Brennkraftmaschine nachgeschalteten Getriebes aus den Signalen der Geber,
**dadurch gekennzeichnet,** daß
- ferner ein Geber (8) für die Fahrzeuggeschwindigkeit (v(t)) mit nachgeschalteter Differenziereinrichtung zur Bestimmung einer Reaktion des Fahrzeuges auf die Stellung des Leistungssteuerorganes (alpha(t)) vorgesehen ist,
- eine erste Vergleichseinrichtung das Signal für die Stellung des Leistungssteuerorganes (alpha(t)) und das Signal für die Reaktion des Fahrzeuges hierauf zueinander ins Verhältnis setzt,
- eine zweite Vergleichseinrichtung eine Abweichung des Signales der ersten Vergleichseinrichtung von einem bei normaler Fahrt in der Ebene herrschenden Signal der ersten Vergleichseinrichtung ermittelt und
- eine auf das Schaltkennfeld (SKFj) wirkende Verschiebeeinrichtung die Übersetzungen abhängig von der Abweichung zu höheren Motordrehzahlen hin verschiebt.

4. Vorrichtung nach Anspruch 3, **dadurch gekennzeichnet,** daß die erste Vergleichseinrichtung und die zweite Vergieichseinrichtung in einem Kennfeld (27) zusammengefaßt sind, das abhängig von einer Änderung der Fahrzeuggeschwindigkeit (dv(t)/dt) und der Stellung des Leistungssteuerorganes (alpha(t)) eine Zwischengröße (SKPl(t)) bestimmt.

5. Vorrichtung nach Anspruch 4, **dadurch gekennzeichnet,** daß dem Kennfeld (27) ein PT1-Filter nachgeschaltet ist und nach der gefilterten Zwischengröße (SKP1(t)) die auf das Schaltkennfeld (SKFj) wirkende Verschiebeeinrichtung die Übersetzungen abhängig von der Abweichung zu höheren Motordrehzahlen hin verschiebt, wobei die Verschiebung in Betrag und Größe mit steigender Zwischengröße (SKPl(t)) steigt.

6. Vorrichtung nach Anspruch 5, **dadurch gekennzeichnet,** daß das Kennfeld (27) zusätzlich von der eingestellten Übersetzung abhängig ist und die Zwischengröße (SKPl(t)) vor der Filterung mit steigender Fahrzeuggeschwindigkeit (v(t)) reduziert wird.

7. Vorrichtung nach einem der Ansprüche 3 bis 6, **dadurch gekennzeichnet,** daß
- als automatisches Getriebe ein automatisch schaltendes Stufengetriebes verwendet ist.
- mehrere, den Bereich zwischen einem verbrauchsoptimalen und einem leistungsoptimalen Betrieb abdeckende Schaltkennfeldern (SFFj) vorgesehen sind, mittels derer wenigstens abhängig von der Stellung des Leistungssteuerorganes (alpha(t)) und von der Motordrehzahl (nmot(t)) Übersetzungen automatisch gewählt werden und die sich in der Lage der Schaltkennlinien, an denen ein Wechsel der Übersetzung stattfindet, unterscheiden,
- mehrere Kennfelder (27) zur Ermittlung des Verhältnisses der Stellung des Leistungssteuerorganes (alpha(t)) zur Reaktion des Fahrzeuges vorgesehen sind, von denen eines nach Maßgabe der eingestellten Übersetzung zur Bestimmung einer Zwischengröße (SKPl(t)) abhängig von einer Änderung der Fahrzeuggeschwindigkeit (dv(t)/dt) und der Stellung des Leistungssteuerorganes (alpha(t)) herangezogen wird,
- die Zwischengröße (SKP1(t)) mit einem von der Fahrgeschwindigkeit (v(t)) abhängigen Faktor multipliziert wird, der mit steigender Fahrgeschwindigkeit (v(t)) den Wert der Zwischengröße (SKP1(t)) immer weiter verkleinert
- diese Zwischengröße (SKPl(t)) dann einen PT1-Filter durchläuft und
- schließlich zur Verschiebung der Übersetzung das zu verwendende Schaltkennfeld (SKFj) nach der gefilterten Zwischengröße (SKP1(t)) ausgewählt wird, wobei mit steigender Zwischengröße (SKPl(t)) Schaltkennfelder (SKPj) gewählt werden, die zunehmend den leistungsoptimalen Betrieb abdecken.

8. Vorrichtung nach einem der Ansprüche 3 bis 6, **dadurch gekennzeichnet,** daß
- als automatisches Getriebe ein automatisch schaltendes stufenloses Getriebe verwendet ist.
- mehrere, den Bereich zwischen einem verbrauchsoptimalen und einem leistungsoptimalen Betrieb abdeckende Steuerkennlinien vorgesehen sind, mittels derer wenigstens abhängig von der Stellung des Leistungssteuerorganes (alpha(t)) und von der Motordrehzahl (nmot(t)) Übersetzungen automatisch gewählt werden,
- mehrere Kennfelder (27) zur Ermittlung des Verhältnisses der Stellung des Leistungssteuerorganes (alpha(t)) zur Reaktion des Fahrzeuges vorgesehen sind, von denen eines nach Maßgabe der eingestellten Übersetzung zur Bestimmung einer Zwischengröße (SKPl(t)) abhängig von einer Änderung der Fahrzeuggeschwindigkeit (dv(t)/dt) und der Stellung des Leistungssteuerorganes (alpha(t)) herangezogen wird,
- die Zwischengröße (SKPl(t)) mit einem von der Fahrgeschwindigkeit (v(t)) abhängigen Faktor multipliziert wird, der mit steigender Fahrgeschwindigkeit (v(t)) den Wert der Zwischengröße (SKP1(t)) immer weiter verkleinert
- diese Zwischengröße (SKP1(t)) dann einen PT1-Filter durchläuft und
- schließlich zur Verschiebung der Übersetzung die zu verwendende Steuerkennlinie nach der gefilterten Zwischengröße (SKP1(t)) ausgewählt wird, wobei mit steigender Zwischengröße (SKP1(t)) Steuerkennlinien gewählt werden, die zunehmend den leistungsoptimalen Betrieb abdecken.

## Claims

1. A method for controlling an automatic transmission of a motor vehicle driven by an internal combustion engine, wherein the internal combustion engine may be influenced by means of a power control element, preferably an accelerator pedal or a throttle valve, and gear ratios of the transmission are automatically selected at least in dependence on the position of the power control element (alpha(t)) and the engine revs (nmot(t)), characterised in that
- a reaction of the vehicle to the position of the power control element (alpha(t)) is ascertained,
- a relationship is established between the position of the power control element (alpha(t)) and a reaction of the vehicle thereto, the reaction of the vehicle being detected by a change in road speed (dv(t)/dt),
- deviation of this relationship from a relationship prevailing during normal driving on the level is ascertained and
- the gear ratios are shifted up to higher engine revs depending on the deviation.

2. A method according to claim 1, characterised in that the shifting of the gear ratio increases in magnitude and speed with the deviation and is implemented in accordance with PT1 behaviour.

3. A device for controlling an automatic transmission of a motor vehicle driven by an internal combustion engine, comprising
- a sensor for the position of a power control element (6) of the internal combustion engine, preferably an accelerator pedal or a throttle valve,
- a sensor for the engine revs (nmot(t)) of the internal combustion engine (7) and
- at least one gear-change characteristic map (SKFj) or at least one control characteristic for automatically determining a gear ratio of a transmission connected on the output side of the internal combustion engine from the signals of the sensors, characterised in that
- a sensor (8) for the road speed (v(t)) with a differentiating means connected on the output side thereof for determining a reaction of the vehicle to the position of the power control element (alpha(t)) is also provided,
- a first comparison means establishes a relationship between the signal for the position of the power control element (alpha(t)) and the signal for the reaction of the vehicle thereto,
- a second comparison means ascertains deviation of the signal of the first comparison means from a signal of the first comparison means prevailing during normal driving on the level, and
- a shifting means acting on the gear-change characteristic map (SKFj) shifts the gear ratios up to higher engine revs depending on the deviation.

4. A device according to claim 3, characterised in that the first comparison means and the second comparison means are combined into a characteristic map (27) which determines an intermediate variable (SKP1(t)) depending on a change in the road speed (dv(t)/dt) and the position of the power control element (alpha(t)).

5. A device according to claim 4, characterised in that a PT1 filter is connected on the output side of the characteristic map (27) and in accordance with the filtered intermediate variable (SKP1(t)) the shifting means acting on the gear-change characteristic map (SKFj) shifts the gear ratios up to higher engine revs depending on the deviation, the shift increasing in amount and magnitude as the intermediate variable (SKP1(t)) increases.

6. A device according to claim 5, characterised in that the characteristic map (27) is additionally dependent on the set gear ratio and the intermediate variable (SKP1(t)) is reduced before filtering as the road speed (v(t)) increases.

7. A device according to one of claims 3 to 6, characterised in that
- an automatic gear-change multi-step transmission is used as the automatic transmission.
- several gear-change characteristic maps (SFFj) [sic, recte (SKFj)] covering the range between optimum-consumption and optimum-performance operation are provided, by means of which gear ratios are automatically selected at least in dependence on the position of the power control element (alpha(t)) and the engine revs (nmot(t)), and which differ in the position of the gear-change characteristics at which a change of gear ratio occurs,
- several characteristic maps (27) are provided for ascertaining the relationship between the position of the power control element (alpha(t)) and the reaction of the vehicle, one of which is used in accordance with the set gear ratio to determine an intermediate variable (SKP1(t)) depending on a change in the road speed (dv(t)/dt) and the position of the power control element (alpha(t)),
- the intermediate variable (SKPl(t)) is multiplied by a factor dependent on the road speed (v(t)) which progressively decreases the value of the intermediate variable (SKPl(t)) as the road speed (v(t)) increases
- this intermediate variable (SKP1(t)) then passes through a PT1 filter and
- finally the gear-change characteristic map (SKFj) to be used is selected is accordance with the filtered intermediate variable (SKPl(t)) to shift the gear ratio, gear-change characteristic maps (SKPj) [sic, recte (SKFj)] which increasingly cover the optimum-performance operation being selected as the intermediate variable (SKP1(t)) increases.

8. A device according to one of claims 3 to 6, characterised in that
- an automatic gear-change continuously variable transmission is selected as the automatic transmission.
- several control characteristics covering the range between optimum-consumption and optimum-performance operation are provided, by means of which gear ratios are automatically selected at least in dependence on the position of the power control element (alpha(t)) and the engine revs (nmot(t)),
- several characteristic maps (27) are provided for ascertaining the relationship between the position of the power control element (alpha(t)) and the reaction of the vehicle, one of which is used in accordance with the set gear ratio to determine an intermediate variable (SKP1(t)) depending on a change in the road speed (dv(t)/dt) and the position of the power control element (alpha(t)),
- the intermediate variable (SKP1(t)) is multiplied by a factor dependent on the road speed (v(t)) which progressively decreases the value of the intermediate variable (SKPl(t)) as the road speed (v(t)) increases
- this intermediate variable (SKP1(t)) then passes through a PT1 filter and
- finally the control characteristic to be used is selected in accordance with the filtered intermediate variable (SKP1(t)) to shift the gear ratio, control characteristics which increasingly cover the optimum-performance operation being selected as the intermediate variable (SKP1(t)) increases.

## Revendications

1. Procédé de commande pour une boîte de vitesses automatique d'un véhicule automobile entraîné par un moteur à combustion interne, le moteur à combustion interne pouvant être placé sous une influence, au moyen d'un organe de commande de puissance, de préférence d'une pédale accélérateur ou d'un clapet d'étranglement, et les rapports de transmission de la boîte de vitesses étant sélectionnés automatiquement au moins en fonction de la position de l'organe de puissance (alpha(t)) et de la vitesse de rotation moteur (nmot(t)), caractérisé en ce qu'
- une réaction du véhicule à la position de l'organe de commande de puissance (alpha(t)) est déterminée,
- la position de l'organe de commande de puissance (alpha(t)) et une réaction du véhicule à celle-ci sont placées en un rapport, la réaction du véhicule étant appréhendée par le biais de la fluctuation de la vitesse de véhicule (dv(t)/dt),
- un écart de ce rapport par rapport à un rapport régnant en roulage normal sur un plan horizontal étant déterminé et,
- les rapports de transmission étant changés en fonction de l'écart s'étant manifesté pour les vitesses de rotation moteur élevées.

2. Procédé selon la revendication 1, caractérisé en ce que le changement du rapport de transmission augmente, en ampleur et en vitesse, avec la valeur de l'écart et est effectué d'après un comportement PT1.

3. Dispositif de commande PT1 d'une boite de vitesses automatique d'un véhicule automobile entraîné par un moteur à combustion interne, avec
- un capteur de la position d'un organe de position de commande de puissance (6), de préférence d'une pédale d'accélérateur ou d'un clapet d'étranglement, du moteur à combustion interne,
- un capteur de vitesse de rotation moteur (nmot(t)) du moteur à combustion interne (7), et
- au moins un champ de caractéristiques de manoeuvre (SKSj) ou au moins une caractéristique de commande, afin de déterminer automatiquement les rapports de transmission d'une boîte de vitesses montée en circuit en aval du moteur à combustion interne, à partir des signaux issus des capteurs, caractérisé en ce que,
- il est en outre prévu un capteur (8) de la vitesse de roulage véhicule (V(t)), avec un dispositif de différenciation mis en circuit en aval, en vue de déterminer une réaction du véhicule à la position de l'organe de commande de puissance (alpha(t)),
- un premier dispositif comparateur établit le rapport mutuel entre le signal de la position de l'organe de commande de puissance (alpha(t)) et le signal de la réaction du véhicule suite à cela,
- un deuxième dispositif comparateur détermine l'écart entre le signal du premier dispositif comparateur et un signal, régnant en cas de roulage normal dans le plan horizontal, issu du premier dispositif comparateur, et
- un dispositif de changement de vitesse, agissant sur le champ de caractéristiques de manoeuvre (SKFj) change les rapports de transmission en fonction de l'écart, constaté pour les hautes vitesses de rotation moteur.

4. Dispositif selon la revendication 3, caractérisé en ce que le premier dispositif comparateur et le deuxième dispositif comparateur sont regroupés en un champ de caractéristiques (27) qui, en fonction de la fluctuation de la vitesse de roulage (dv(t)/dt) et de la position de l'organe de commande de puissance (alpha(t)), détermine une grandeur intermédiaire (SKP1(t)).

5. Dispositif selon la revendication 4, caractérisé en ce qu'en aval du champ de caractéristiques (27) est mis en circuit un filtre PT1 et, selon la grandeur intermédiaire filtrée (SKP1(t)), le dispositif de changement de vitesse agissant sur le champ de caractéristiques (SKFj) change les rapports de transmission en fonction de l'écart constaté aux vitesses de rotation moteur élevées, le changement augmentant en nombre et en ampleur lorsque la grandeur intermédiaire (SKP1(t)) augmente.

6. Dispositif selon la revendication 5, caractérisé en ce que le champ de caractéristiques (27) dépend en plus du rapport de transmission réglé et la grandeur intermédiaire (SKP1(t)) que l'on a après le filtrage est réduite lorsque la vitesse de roulage de véhicule (V(t)) augmente.

7. Dispositif selon l'une des revendications 3 à 6, caractérisé en ce que,
- on utilise comme boîte de vitesses automatique une boîte de vitesses à rapports étagés à manoeuvre automatique pour,
- plusieurs champs de caractéristiques de manoeuvres (SFFj) couvrant la zone située entre un fonctionnement optimal pour la consommation et un fonctionnement optimal pour la puissance étant prévus, champs au moyen desquels, au moins en fonction de la position de l'organe de position de puissance (alpha(t)) et de la vitesse de rotation moteur (nmot(t)), les rapports de transmission sont sélectionnés de façon automatique et se distinguent au niveau de la position des caractéristiques de manoeuvre auxquelles se produit un changement du rapport de transmission,
- plusieurs champs de caractéristiques (27) étant prévus pour déterminer le rapport entre la position de l'organe de commande de puissance (alpha(t)) et la réaction du véhicule, champs dont l'un est sollicité, d'après les indications du rapport de transmission réglé, pour déterminer une grandeur intermédiaire (SKP1(t)) en fonction de la fluctuation de la vitesse de roulage (dv(t)/dt) et de la position de l'organe de commande de puissance (alpha(t)),
- la grandeur intermédiaire (SKP1(t)) est multipliée par un facteur dépendant de la vitesse de roulage (v(t)), facteur qui diminue toujours plus la valeur de la grandeur intermédiaire (SKP1(t)) lorsque la vitesse de roulage (v(t)) augmente,
- cette grandeur intermédiaire (SKP1(t)) étant ensuite passée dans un filtre PT1, et
- enfin, pour changer le rapport de transmission étant sélectionné le champ de caractéristiques de manoeuvre (SKFj) à utiliser, après que la grandeur intermédiaire (SKP1(t)) ait été filtrée, où, lorsque la grandeur intermédiaire (SKP1(t) augmente, sont choisis des champs de caractéristique de manoeuvre (SKPj) qui couvrent de plus en plus le fonctionnement optimal en puissance.

8. Dispositif selon l'une des revendications 3 à 6, caractérisé en ce qu'
- on utilise comme boîte de vitesses automatique une boite de vitesses à progression continue, à manoeuvre automatique,
- sont prévues plusieurs caractéristiques de commande, couvrant la zone située entre un fonctionnement à consommation optimale et à fonctionnement à puissance optimale, au moyen desquelles les rapports de transmission sont sélectionnés automatiquement, au moins en fonction de la position de l'organe de commande de puissance (alpha(t)) et de la vitesse de rotation moteur (nmot(t)),
- plusieurs champs de caractéristiques (27), étant prévus pour déterminer le rapport entre la position de l'organe de commande de puissance (alpha(t)) et la réaction du véhicule, champs dont l'un est sollicité, d'après les indications du rapport de transmission réglé, pour déterminer une grandeur intermédiaire (SKP1(t)) en fonction de la fluctuation de la vitesse de roulage (dv(t)/dt) et de la position de l'organe de commande de puissance (alpha(t)),
- la grandeur intermédiaire (SKP1(t)) est multipliée par un facteur dépendant de la vitesse de roulage (v(t)), facteur qui diminue toujours plus la valeur de la grandeur intermédiaire (SKP1(t)) lorsque la vitesse de roulage (v(t)) augmente,
- cette grandeur intermédiaire (SKP1(t)) étant ensuite passée dans un filtre PT1, et
- enfin, pour changer le rapport de transmission étant sélectionnée la caractéristique de commande à utiliser, après que la grandeur intermédiaire (SKP1(t)) ait été filtrée, où, lorsque la grandeur intermédiaire (SKP1(t) augmente, sont choisis des caractéristiques de commande qui couvrent de plus en plus le fonctionnement optimal en puissance.
